# FASCICULE DE BREVET EUROPEEN

(11) **EP 2 251 232 B1**
(45) Date de publication et mention de la délivrance du brevet: **31.12.2014**
(21) Numéro de dépôt: 10305488.8
(22) Date de dépôt: 10.05.2010
(51) Int. Cl.: B60R 19/04

(54) **Structure de bouclier avant de véhicule automobile comprenant des éléments d'absoption répartis transversalement.**
Vordere Stoßfängerstruktur eines Kraftfahrzeugs, die quer verteilte Elemente zur Absorption umfasst
Front bumper structure of an automobile including transversely distributed absorption elements

(30) Priorité: 11.05.2009 FR 0953102
(43) Date de publication de la demande: 17.11.2010
(73) Titulaire: Faurecia Bloc Avant, 92000 Nanterre (FR)
(72) Inventeur: Gonin, Vincent, 25600, SOCHAUX (FR)
(74) Mandataire: Blot, Philippe Robert Emile

(56) Documents cités:
- EP-A- 1 340 653
- EP-A- 1 623 879
- WO-A-02/09980
- WO-A-2006/103355
- DE-A1- 10 041 064

## Description

### Structure de bouclier avant de véhicule automobile comprenant des éléments d'absorption répartis transversalement

La présente invention concerne une structure de bouclier avant de véhicule automobile, du type structure de bouclier avant de véhicule automobile, destinée à être fixée à au moins un élément du châssis du véhicule automobile, ladite structure comprenant une poutre transversale destinée à être fixée à l'élément du châssis et une peau de bouclier destinée à former la face avant du véhicule automobile, une zone de choc piéton occupant une partie de la structure de bouclier entre les parties extrêmes transversales de la poutre et de la peau de bouclier, au moins un élément d'absorption d'énergie souple étant disposé entre la poutre et la peau de bouclier dans la zone de choc piéton.

La structure de bouclier avant d'un véhicule automobile est disposée en avant du bloc moteur et est agencée pour favoriser l'absorption de l'énergie en cas de choc contre la face avant du véhicule automobile. Cette absorption d'énergie permet de protéger les occupants du véhicule et/ou les piétons et de limiter les dégradations du véhicule automobile occasionnées par le choc.

Plus particulièrement et selon différentes normes, la structure de bouclier doit être agencée pour absorber de l'énergie de façon optimale pour des chocs de faible et de moyenne intensité contre un obstacle (choc « Danner »), des chocs à basse vitesse (10 km/h) et haute vitesse (64 km/h) contre d'autres véhicules (choc « compatibilité ») et pour protéger au mieux un piéton heurtant le véhicule (« choc piéton »).

L'absorption de l'énergie due à des chocs Danner se fait par l'intermédiaire d'éléments d'absorption rigides, ou « crashboxes », fixés sur des éléments du châssis du véhicule, tels que les prolonges de berceaux ou les longerons s'étendant vers l'avant du véhicule.

Une poutre transversale est fixée sur la face avant des éléments d'absorption rigides et est agencée pour absorber de l'énergie par déformation et limiter le déplacement des éléments du bloc avant vers l'arrière, afin d'éviter l'intrusion de ces éléments dans l'habitacle.

Des éléments d'absorption d'énergie souples sont disposés à l'avant de la poutre transversale pour permettre l'absorption d'énergie en cas de choc avec un piéton, afin d'assurer la protection de ceux-ci. De tels éléments occupent généralement l'intégralité de la largeur du véhicule à l'avant de celui-ci.

Enfin, une peau de bouclier recouvre la structure. Cette peau assure également une protection du véhicule en cas de choc et confère son aspect à la face avant du véhicule.

Cependant, celle répartition selon la direction longitudinale du véhicule des éléments de la structure de bouclier n'est pas satisfaisante car elle ne permet pas d'optimiser l'absorption d'énergie et présente un encombrement important, ce qui augmente la partie de l'avant du véhicule qui est en porte-à-faux par rapport au reste du véhicule.

Les performances d'absorption d'une telle structure de bouclier pour les chocs compatibilité sont faibles du fait de la forme agressive des poutres transversales métalliques et de la partie en porte-à-faux.

En outre, un tel agencement de la structure lui confère une zone d'intrusion relativement importante. La zone d'intrusion correspond à la distance sur laquelle les éléments de la structure de bouclier pénètrent dans le bloc avant du véhicule et elle doit donc être la plus petite possible.

EP 1 340 653 décrit un système de pare-chocs avant de véhicule automobile comprenant une plaque de sécurité piéton, connectée à une poutre de pare-choc en acier, voir préambule de la revendication 1.

L'un des buts de l'invention est de pallier les inconvénients ci-dessus en proposant une structure de bouclier compacte, permettant d'améliorer les performances d'absorption d'énergie et limitant la zone d'intrusion.

A cet effet, l'invention concerne une structure de bouclier selon la revendication 1.

La répartition des éléments de la structure permet d'optimiser les performances de la structure de bouclier. En plaçant les éléments d'absorption souples uniquement dans la zone de choc piéton, ces éléments ne s'étendent plus sur toute la largeur du véhicule, ce qui dégage un espace pour les éléments d'absorption rigides. Ainsi, la répartition des éléments d'absorption se fait selon la direction transversale et non plus la direction longitudinale. Ceci permet de réduire l'encombrement de la structure et donc de réduire la partie en porte-à-faux.

D'autres caractéristiques de la structure de bouclier sont définies dans les revendications 2 à 7.

L'invention concerne également un véhicule automobile selon la revendication 8.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective d'une structure de bouclier selon l'invention,
- la Fig. 2 est une représentation schématique en perspective éclatée de la structure de bouclier de la Fig. 1,
- la Fig. 3 est une représentation schématique en coupe selon l'axe III-III de la Fig. 1,
- la Fig. 4 est une représentation schématique en coupe similaire à la Fig. 3 selon un autre mode de réalisation de la structure de bouclier.

Dans la description, les termes « longitudinal », « transversal », « avant », « arrière » sont définis selon les directions usuelles d'un véhicule automobile monté. C'est-à-dire que la direction longitudinale est définie selon la longueur du véhicule et la direction transversale est définie selon la largeur du véhicule.

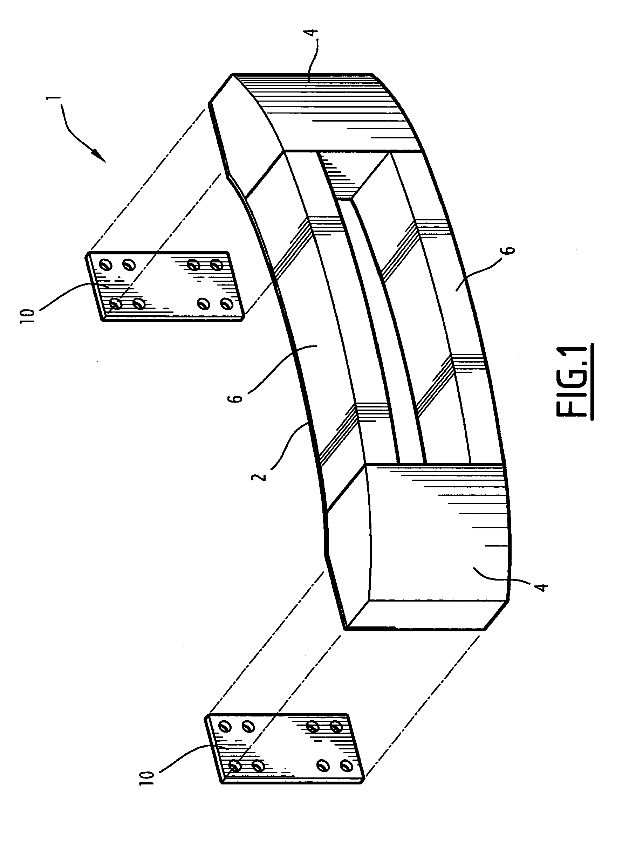

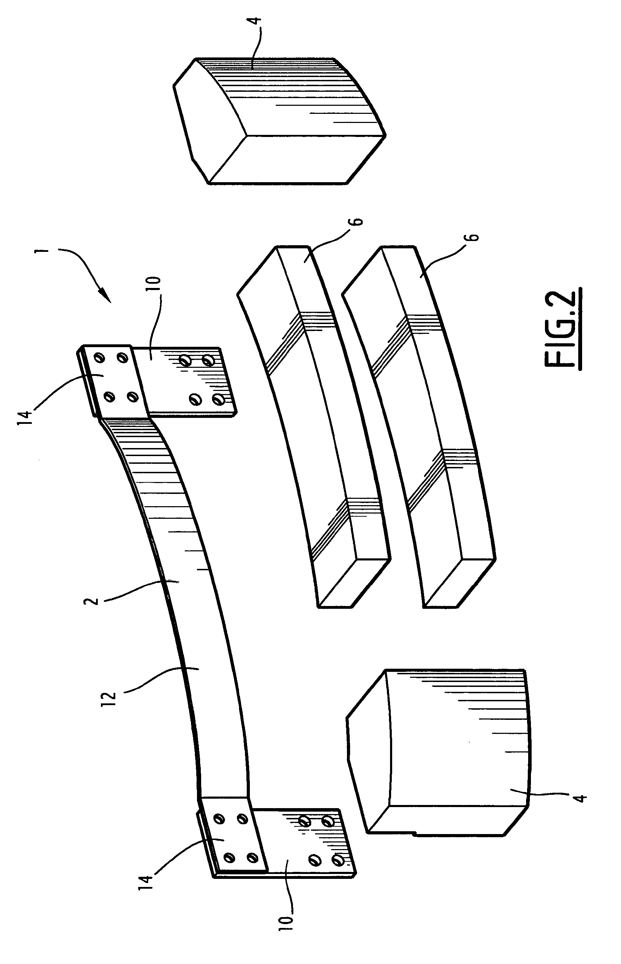

En référence aux Fig. 1 et 2, on décrit une structure de bouclier avant 1 de véhicule automobile (non représenté) comprenant une poutre transversale 2, des éléments d'absorption rigides 4 et des éléments d'absorption souples 6 afin d'assurer l'absorption d'au moins une partie de l'énergie due à différents types de chocs.

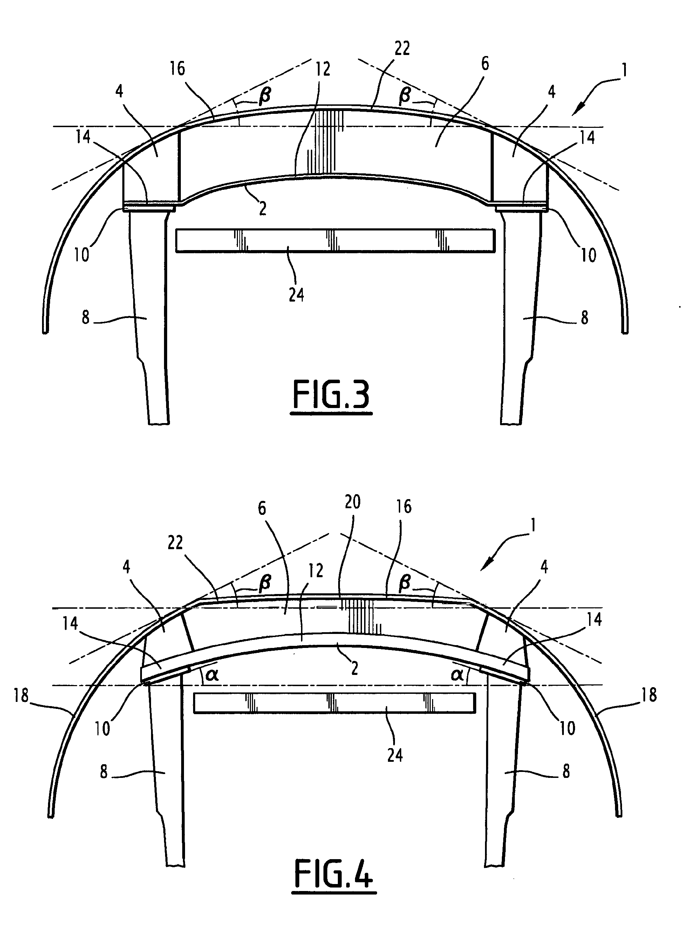

La structure de bouclier 1 est destinée à s'étendre à l'avant d'un véhicule automobile et à former la face avant de ce véhicule. Pour ce faire, la structure 1 est fixée sur des éléments du châssis du véhicule automobile, tels que les parties extrêmes de brancards ou de longerons 8, comme représenté sur les Fig. 3 et 4.

Pour assurer sa fixation, la structure de bouclier 1 comprend deux platines métalliques 10, chacune étant fixée à une partie extrême d'un brancard 8. Les platines 10 s'étendent sensiblement sur toute la hauteur de la structure de bouclier 1 et sont espacées l'une de l'autre selon la largeur du véhicule de sorte à être disposées chacune au voisinage d'une partie extrême transversale de la structure de bouclier.

Les platines 10 sont fixées sur les prolonges de brancard 8, par exemple par vissage, de sorte que leur face arrière est en appui contre ces prolonges de brancard. Sur la face avant de chaque platine 10 est fixée une partie extrême de la poutre transversale 2, comme représenté sur la figure 2. Cette fixation peut également être réalisée par vissage.

Comme cela est représenté sur la figure 2, la hauteur des platines 10 est supérieure à la hauteur de la poutre transversale 2. Ainsi, les platines 10 s'étendent en-dessous d'un bord inférieur de la poutre transversale 2 .

La poutre transversale 2 est métallique et a un rôle structurel de rigidification et de liaison des différents éléments de la structure de bouclier. Cette poutre 2 présente par exemple au moins une partie courbe 12 s'avançant vers l'avant du véhicule automobile. Selon le mode de réalisation représenté sur les Fig. 1 à 3, la poutre 2 comprend une partie courbe entre ses parties extrêmes 14 qui s'étendent selon la direction transversale. Dans ce cas, les platines 10 s'étendent dans le plan transversal, comme représenté sur les Fig. 1 à 3. Selon un autre mode de réalisation représenté sur la Fig. 4, les parties extrêmes 14 de la poutre s'étendent dans le prolongement de la partie courbe 12 et forment un angle par rapport à la direction transversale. Dans ce cas, les platines 10 forment également un angle α, par exemple compris entre 0° et 10°, par rapport à la direction transversale de sorte à s'étendre parallèlement aux parties extrêmes 14 de la poutre transversale 2. La partie extrême des brancards 8 s'étend alors également parallèlement aux parties extrêmes 14 de la poutre 2. Une telle forme arquée de la poutre 2 rend celle-ci moins agressive sur ses parties extrêmes 14, ce qui permet d'améliorer les performances de la structure 1 en cas de choc compatibilité. En effet, en cas de choc compatibilité, c'est-à-dire entre deux véhicules, il convient de s'assurer que le véhicule n'endommage pas trop l'autre véhicule avec lequel la collision se produit. A cet effet, moins la forme de la structure du bouclier est agressive, meilleures sont les performances de la structure pour les chocs compatibilité.

Comme représenté sur les Fig. 3 et 4, la structure de bouclier 1 comprend en outre une peau de bouclier 16, ou peau de pare-choc, formant la face avant du véhicule automobile et disposée à une certaine distance en avant de la poutre métallique 2. Cette peau de bouclier 16 confère son aspect extérieur à la face avant du véhicule automobile. La peau 16 présente également une forme sensiblement courbe comme représenté sur les Fig. 3 et 4, afin de réduire l'agressivité de la structure de bouclier 1. Selon le mode de réalisation représenté sur la Fig. 3, la peau de pare-choc 16 présente une forme d'arc de cercle. Selon le mode de réalisation représenté sur la Fig. 4, la peau de bouclier présente des parties extrêmes 18 courbes et une partie centrale 20 sensiblement rectiligne et s'étendant selon la direction transversale, permettant de réduire l'encombrement de la structure de bouclier 1.

Les éléments d'absorption d'énergie rigides 4 et souples 6 sont disposés entre la face avant de la poutre transversale 2 et la peau de bouclier 16.

La peau de bouclier 16 définit une zone de choc piéton 22 s'étendant selon la direction transversale et dans laquelle la structure de bouclier doit permettre d'absorber efficacement l'énergie due à un choc avec un piéton afin de limiter les risques de blessures de ce piéton. La zone de choc piéton 22 est définie entre les deux points de la peau de bouclier 16 où la tangente à la peau 16 en ces points forme un angle β de sensiblement 30° avec la direction transversale, comme représenté sur les Fig. 3 et 4.

Dans cette zone de choc piéton 22, l'absorption d'énergie doit répondre à des normes particulières permettant de protéger les piétons en cas de choc contre le véhicule automobile. A cet effet, deux éléments d'absorption souples 6 sont disposés entre la poutre transversale 2 et la peau de bouclier 16 et s'étendent selon la direction transversale dans la zone de choc piéton 22. Ainsi, ces éléments d'absorption 6 ne s'étendent pas selon toute la largeur de la structure de bouclier 1, mais uniquement dans la zone de choc piéton 22. Les éléments d'absorption souples 6 sont agencés pour absorber l'énergie due à un choc en respectant les normes de protection des piétons.

La structure de bouclier 1 comprend par exemple deux éléments d'absorption souples 6 disposés respectivement dans la partie supérieure et dans la partie inférieure de la structure de bouclier 1, comme représenté sur les Fig. 1 et 2.

L'élément d'absorption disposé dans la partie supérieure est très souple de manière à favoriser l'enfoncement de la jambe, à initier une cinématique de rotation sur le capot et à limiter les décélérations subies par ladite jambe. La raideur de l'élément d'absorption disposé en partie haute est aménagée de manière à ce que l'effort sur la jambe soit limité à une valeur seuil (tarage) comprise entre 2000 N et 5000 N environ.

L'élément d'absorption disposé en partie basse est moyennement souple de manière à arrêter la progression de la jambe, à initier une cinématique de rotation sur le capot en complémentarité de l'enfoncement de l'absorbeur haut tout en limitant les décélérations subies par la jambe. A cet effet, la raideur de l'élément d'absorption disposé en partie basse est aménagée de manière à ce que l'effort sur la jambe soit limité à une valeur seuil (tarage) comprise entre 4000 N et 7000N environ.

Les éléments d'absorption souples 6 et les éléments d'absorption rigides 4 sont par exemple réalisés en matière plastique.

Les éléments d'absorption souples 6 s'étendant uniquement dans la zone de choc piéton et non sur toute la largeur du véhicule automobile, des espaces sont dégagés entre la poutre métallique 2 et la peau de bouclier 16 en regard des parties extrêmes 14 de la poutre 2 et des platines 10. Ces espaces sont occupés chacun par un élément d'absorption rigide 4. Ces éléments rigides 4 ont pour fonction d'absorber de l'énergie en cas de choc Danner. Ces éléments 4 s'étendent sensiblement sur toute la hauteur de la structure de bouclier, comme les platines 10, comme représenté sur les Fig. 1 et 2.

Ainsi, les éléments d'absorption rigide 4 sont placés devant la poutre transversale 2 et non derrière celle-ci comme c'était le cas auparavant. Ce positionnement permet de rigidifier les parties latérales de la structure de bouclier 1 autour de la zone de choc piéton 22, ce qui répond à la demande des constructeurs de rigidifier ces zones latérales et d'offrir une résistance à l'intrusion. Le rôle de ces éléments d'absorption rigides latéraux est de consommer l'énergie d'impact à vitesse faible ou moyenne (notamment impacts AZT/Danner à 15km/h), de la manière la plus efficace possible, c'est-à-dire sur une course très réduite, tout en protégeant la structure du véhicule. Pour ne pas endommager la structure de caisse (brancards, prolonges, berceau...), ces éléments d'absorption doivent limiter l'effort en deçà d'une valeur précise appelée « tarage». A cet effet, la raideur de chaque élément d'absorption rigide latéral 4 est aménagée de manière à ce que l'effort perçu par la structure soit limité à une valeur seuil (tarage) comprise entre 75 kN et 110 kN environ. Les éléments d'absorption rigides 4 et souples 6 occupent selon la direction longitudinale sensiblement tout l'espace prévu entre la poutre transversale 2 et la peau de bouclier 16.

La structure de bouclier 1 décrite ci-dessus permet d'optimiser l'absorption d'énergie en cas de choc, quel que soit le type de choc. La protection des piétons est assurée par les éléments d'absorption souples 6 dans la zone de choc piéton 22 uniquement, les besoins en terme de souplesse étant réduits en dehors de cette zone. Autour de la zone piéton 22, la structure de bouclier est rigidifiée par les éléments d'absorption rigides 4, permettant d'absorber l'énergie en cas de choc Danner et de réduire l'intrusion de la structure de bouclier 1 en cas de choc. L'intrusion en cas de choc Danner est limitée grâce à une montée en effort très rapide du fait que les éléments d'absorption rigides 4 sont disposés directement derrière la peau 16. L'intrusion est réduite de plusieurs dizaines de millimètres par rapport aux structures de bouclier classique. L'intrusion réduite permet de limiter les coûts de réparation après un choc en évitant la destruction d'organes du bloc moteur lors de la déformation du véhicule.

En outre, la répartition des éléments d'absorption selon la direction transversale et non selon direction longitudinale permet de réduire l'encombrement de la structure de bouclier. Ainsi, la partie en porte-à-faux est minimisée, ce qui permet de réduire encore l'intrusion en cas de choc et offre un meilleur aspect à la structure de bouclier. De plus, la forme moins agressive de la structure de bouclier 1 permet d'améliorer les performances de la structure en cas de choc compatibilité. En outre, la réduction de la taille de la partie en porte-à-faux permet de réduire la masse de la structure de bouclier 1.

L'espace entre la poutre transversale 2 et le radiateur 24 (Fig. 3 et 4) est optimisé pour offrir un meilleur refroidissement.

La rigidité de la caisse du véhicule est améliorée du fait qu'on supprime les éléments déformables entre la poutre 2 et les parties extrêmes des brancards 8, la poutre 2 étant liée directement à ces brancards 8.

## Revendications

1. Structure de bouclier avant (1) de véhicule automobile, destinée à être fixée à au moins un élément (8) du châssis du véhicule automobile, ladite structure comprenant une poutre transversale (2) destinée à être fixée à l'élément (8) du châssis et une peau de bouclier (16) destinée à former la face avant du véhicule automobile, une zone de choc piéton (22) occupant une partie de la structure de bouclier entre les parties extrêmes transversales (14, 18) de la poutre (2) et de la peau de bouclier (16), au moins un élément d'absorption d'énergie souple (6) étant disposé entre la poutre (2) et la peau de bouclier (16) dans la zone de choc piéton (22), la structure de bouclier avant (1) comprenant en outre deux platines (10) sur chacune desquelles est fixée une partie extrême transversale (14) de la poutre (2), lesdites platines (10) étant destinées à être fixées chacune sur un élément (8) du châssis du véhicule automobile, et la structure (1) comprenant deux éléments d'absorption d'énergie rigides (4), lesdits éléments d'absorption rigides (4) s'étendant sur sensiblement toute la hauteur de la structure de bouclier (1), **caractérisée en ce que** lesdits éléments (4) sont disposés de part et d'autre de l'élément d'absorption souple (6) entre les parties extrêmes transversales (14, 18) de la poutre (2) et de la peau de bouclier (16) et autour de la zone de choc piéton (22).

2. Structure de bouclier selon la revendication 1, **caractérisée en ce que** les platines (10) forment un angle (α) non nul avec la direction transversale.

3. Structure de bouclier selon l'une des revendications 1 ou 2, **caractérisée en ce que** la poutre (2) présente au moins une partie courbe (12), ladite partie courbe (12) s'étendant en direction de la peau de bouclier (16).

4. Structure de bouclier selon l'une quelconque des revendications 1 à 3, **caractérisée en ce que** la zone de choc piéton (22) s'étend entre deux tangentes de la peau de bouclier (16), lesdites tangentes formant chacune un angle (β) sensiblement égal à 30° par rapport à la direction transversale.

5. Structure de bouclier selon l'une quelconque des revendications 1 à 4, **caractérisée en ce que** la raideur de l'élément d'absorption souple (6) est aménagée de manière à ce que l'effort sur la jambe, en cas de choc avec un piéton, soit limité à une valeur seuil sensiblement comprise entre 2000 N et 7000 N.

6. Structure de bouclier selon l'une quelconque des revendications 1 à 5, **caractérisé en ce que** la raideur de chaque élément d'absorption rigide (4) est aménagée de manière à ce que l'effort perçu par la structure du véhicule automobile, en cas de choc, soit limité à une valeur seuil sensiblement comprise entre 75 kN et 110 kN environ.

7. Structure de bouclier selon l'une quelconque des revendications 1 à 6, **caractérisée en ce qu'**elle comprend deux éléments d'absorption souples (6), lesdits éléments (6) étant disposés respectivement dans la partie supérieure et dans la partie inférieure de la structure de bouclier (1).

8. Véhicule automobile comprenant un châssis pourvu d'au moins un brancard (8) s'étendant vers l'avant dudit véhicule, **caractérisé en ce qu'**une structure de bouclier (1) selon l'une quelconque des revendications 1 à 7 est fixée à la partie extrême avant dudit brancard (8).

## Patentansprüche

1. Frontabschirmungsstruktur (1) für ein Kraftfahrzeug, die vorgesehen ist, um an mindestens einem Element (8) des Fahrgestells des Fahrzeugs befestigt zu sein, wobei die Struktur aufweist: einen Querträger (2), der vorgesehen ist, um an dem Element (8) des Fahrgestells befestigt zu sein, und eine Abschirmungshaut (16), die vorgesehen ist, um die Frontseite des Kraftfahrzeugs auszubilden, wobei ein Fußgängeraufprallbereich (22) einen Teil der Abschirmungsstruktur zwischen den transversalen äußeren Abschnitten (14, 18) des Trägers (2) und der Abschirmungshaut (16) belegt, wobei mindestens ein flexibles Energieabsorptionselement (6) zwischen dem Träger (2) und der Abschirmungshaut (16) in dem Fußgängeraufprallbereich (22) angeordnet ist, wobei die Frontabschirmungsstruktur (1) ferner zwei Platten (10) aufweist, wobei an jeder davon ein transversaler äußerer Abschnitt (14) des Trägers (2) befestigt ist, wobei die Platten (10) vorgesehen sind, um jeweils an einem Element (8) des Fahrgestells des Kraftfahrzeugs befestigt zu sein, und wobei die Struktur (1) zwei steife Energieabsorptionselemente (4) aufweist, wobei sich die steifen Absorptionselemente (4) über im Wesentlichen die gesamte Höhe der Abschirmungsstruktur (1) erstrecken, **dadurch gekennzeichnet, dass** die Elemente (4) auf beiden Seiten des flexiblen Absorptionselements (6) zwischen den transversalen äußeren Abschnitten (14, 18) des Trägers (2) und der Abschirmungshaut (16) und um den Fußgängeraufprallbereich (22) herum angeordnet sind.

2. Abschirmungsstruktur gemäß Anspruch 1, **dadurch gekennzeichnet, dass** die Platten (10) mit der transversalen Richtung einen Winkel (α) ungleich Null ausbilden.

3. Abschirmungsstruktur gemäß einem der Ansprüche 1 oder 2, **dadurch gekennzeichnet, dass** der Träger (2) mindestens einen Krümmungsabschnitt (12) aufweist, wobei sich der Krümmungsabschnitt (12) in Richtung der Abschirmungshaut (16) erstreckt.

4. Abschirmungsstruktur gemäß irgendeinem der Ansprüche 1 bis 3, **dadurch gekennzeichnet, dass** sich der Fußgängeraufprallbereich (22) zwischen zwei Tangenten der Abschirmungshaut (16) erstreckt, wobei die Tangenten bezüglich der transversalen Richtung jeweils einen Winkel (β) ausbilden, der im Wesentlichen gleich 30° ist.

5. Abschirmungsstruktur gemäß irgendeinem der Ansprüche 1 bis 4, **dadurch gekennzeichnet, dass** die Steifigkeit des flexiblen Absorptionselements (6) derart eingerichtet ist, dass im Fall eines Zusammenstoßes mit einem Fußgänger die Belastungskraft auf das Bein auf einen Schwellenwert begrenzt ist, der im Wesentlichen zwischen 2000 N und 7000 N liegt.

6. Abschirmungsstruktur gemäß irgendeinem der Ansprüche 1 bis 5, **dadurch gekennzeichnet, dass** die Steifigkeit jedes steifen Absorptionselements (4) derart eingerichtet ist, dass die von der Struktur des Kraftfahrzeugs im Fall eines Aufpralls aufgenommene Belastungskraft auf einen Schwellenwert begrenzt ist, der im Wesentlichen zwischen etwa 75 kN und 110 kN liegt.

7. Abschirmungsstruktur gemäß irgendeinem der Ansprüche 1 bis 6, **dadurch gekennzeichnet, dass** sie zwei flexible Absorptionselemente (6) aufweist, wobei die Elemente (6) jeweils in dem oberen Abschnitt und in dem unteren Abschnitt der Abschirmungsstruktur (1) angeordnet sind.

8. Kraftfahrzeug, aufweisend ein Fahrgestell, das mit mindestens einem Träger (8) ausgestattet ist, der sich von dem Fahrzeug aus nach vorne erstreckt, **dadurch gekennzeichnet, dass** eine Abschirmungsstruktur (1) gemäß irgendeinem der Ansprüche 1 bis 7 an dem äußeren Frontabschnitt des Trägers (8) befestigt ist.

## Claims

1. Front bumper structure (1) for a motor vehicle, which is intended to be fixed to at least one element (8) of the chassis of the motor vehicle, the said structure comprising a transverse beam (2) which is intended to be fixed to the element (8) of the chassis and a bumper skin (16) which is intended to form the front face of the motor vehicle, a pedestrian impact zone (22) which occupies part of the bumper structure between the transverse end parts (14, 18) of the beam (2) and of the bumper skin (16), at least one flexible energy-absorption element (6) being disposed between the beam (2) and the bumper skin (16) in the pedestrian impact zone (22), the front bumper structure (1) further comprising two plates (10) onto each of which a transverse end part (14) of the beam (2) is fixed, the said plates (10) being intended to each be fixed onto an element (8) of the chassis of the motor vehicle, and the structure (1) comprising two rigid energy-absorption elements (4), the said rigid energy-absorption elements (4) extending over substantially the entire height of the bumper structure (1), **characterised in that** the said elements (4) are disposed on either side of the flexible absorption element (6) between the transverse end parts (14, 18) of the beam (2) and of the bumper skin (16) and around the pedestrian impact zone (22).

2. Bumper structure according to Claim 1, **characterised in that** the plates (10) form a non-zero angle (α) with the transverse direction.

3. Bumper structure according to either of Claims 1 or 2, **characterised in that** the beam (2) has at least one curved part (12), the said curved part (12) extending in the direction of the bumper skin (16).

4. Bumper structure according to any of Claims 1 to 3, **characterised in that** the pedestrian impact zone (22) extends between two tangents of the bumper skin (16), the said tangents each forming an angle (β) which is substantially equal to 30° in relation to the transverse direction.

5. Bumper structure according to any of Claims 1 to 4, **characterised in that** the stiffness of the flexible absorption element (6) is arranged in such a way that the force on the leg, in the case of an impact with a pedestrian, is limited to a threshold value which is substantially between 2000 N and 7000 N.

6. Bumper structure according to any of Claims 1 to 5, **characterised in that** the stiffness of each rigid absorption element (4) is arranged in such a way that the force experienced by the structure of the motor vehicle, in the event of an impact, is limited to a threshold value which is substantially between 75kN and 110 kN or thereabouts.

7. Bumper structure according to any of Claims 1 to 6, **characterised in that** it comprises two flexible absorption elements (6), the said elements (6) being disposed in the upper part and in the lower part, respectively, of the bumper structure (1).

8. Motor vehicle comprising a chassis which is provided with at least one chassis leg (8) which extends towards the front of the said vehicle, **characterised in that** a bumper structure (1) according to any of Claims 1 to 7 is fixed to the front end part of the said chassis leg (8).
